# EUROPÄISCHE PATENTSCHRIFT

(11) **EP 0 962 382 B1**
(45) Veröffentlichungstag und Bekanntmachung des Hinweises auf die Patenterteilung: **16.03.2005**
(21) Anmeldenummer: 99110866.3
(22) Anmeldetag: 07.06.1999
(51) Int. Cl.: B62J 15/02

(54) **Einrichtung zur Befestigung von Streben zur Halterung eines Radschützers**
Fixing device for the mudguard of a bicycle
Dispositif de fixation d'un garde-boue de bicyclette

(30) Priorität: 06.06.1998 DE 29810177 U
(43) Veröffentlichungstag der Anmeldung: 08.12.1999
(73) Patentinhaber: sks-metaplast SCHEFFER-KLUTE GMBH, D-59846 Sundern/Sauerland (DE)
(72) Erfinder: Feldmann, Stefan, 59846 Sundern (DE)
(74) Vertreter: Basfeld, Rainer, Dr. Dipl.-Phys.

(56) Entgegenhaltungen:
- EP-A- 0 694 469
- EP-A- 0 803 429
- DE-A- 4 232 539

## Beschreibung

Die vorliegende Erfindung betrifft eine Einrichtung zur Befestigung von Streben zur Halterung eines Radschützers am Rahmen eines Fahrrads umfassend mindestens ein erstes Teil, an dem mindestens ein Teilstück mindestens einer Strebe zur Halterung des Radschützers befestigt werden kann oder befestigt ist, sowie weiterhin umfassend mindestens ein zweites Teil, das an dem Fahrradrahmen befestigbar ist, wobei das erste und das zweite Teil über eine lösbare Verbindung miteinander verbunden sind, die derart ausgebildet ist, daß sie sich dann selbsttätig löst, wenn eine die Teile auseinanderziehende Kraft einen vorgegebenen Grenzwert überschreitet.

Eine Einrichtung zur Befestigung von Streben zur Halterung eines Radschützers der eingangs genannten Gattung ist aus der EP 0803429 (A2) bekannt. Versuche in der Praxis haben gezeigt, daß die für das Lösen der als Rastverbindung ausgebildeten lösbaren Verbindung notwendige Zugkraft, die im Gefahrenfall notwendig ist, um das zweite Teil von dem ersten Teil zu lösen dann, wenn eine schräge Krafteinleitung erfolgt höher ist, als wenn eine Krafteinleitung in Richtung der Verbindungslinie der beiden Teile erfolgt. Es kann dabei davon ausgegangen werden, daß diese schräge Krafteinleitung in den häufigsten Fällen auftritt, da die Befestigungsvorrichtung für die Anbringung der Streben am Radschützer meistens breiter ist als der eigentliche Radschützer. Somit erhält man keine definierte Auslösekraft, die immer gleich ist, was für die Praxis aus sicherheitstechnischen Gründen angestrebt wird, sondern die Auslösekraft variiert bei der bekannten Einrichtung je nach Anwendungsfall.

Die Aufgabe der vorliegenden Erfindung besteht somit darin, eine Einrichtung zur Befestigung von Streben zur Halterung eines Radschützers am Rahmen eines Fahrrads der eingangs genannten Gattung zu schaffen, bei der eine definierte Auslösekraft möglichst unabhängig von der Richtung, aus der die Kräfte eingeleitet werden, gegeben ist.

Die Lösung dieser Aufgabe liefert eine erfindungsgemäße Einrichtung zur Befestigung von Streben zur Halterung eines Radschützers am Rahmen eines Fahrrads der eingangs genannten Gattung mit den kennzeichnenden Merkmalen des Patentanspruchs 1. Erfindungsgemäß ist die verbindung zwischen erstem und zweitem Teil derart ausgebildet, daß miteinander verbundenes erstes und zweites Teil um mindestens eine Achse gegeneinander zumindest teilweise verschwenkbar sind, wobei diese Achse zu der Verbindungslinie zwischen erstem und zweitem Teil geneigt ist, vorzugsweise senkrecht zu dieser ist. Durch die zumindest teilweise Verschwenkbarkeit der beiden miteinander verbundenen Teile gegeneinander wird das Auslösen der lösbaren verbindung auch bei schräger Krafteinleitung zumindest etwa bei der gleichen vorgegebenen Auslösekraft erfolgen.

Gemäß einer bevorzugten Ausführungsform der vorliegenden Erfindung ist das erste Teil ein Anschlußteil, das eine Aufnahme umfaßt, wobei das zweite Teil ein Einsteckteil ist, das mit einem Abschnitt, der vorzugsweise als Steckfortsatz ausgebildet ist, in die Aufnahme einsteckbar ist, wobei durch Einstecken dieses Abschnittes in die Aufnahme die vorzugsweise als Rastverbindung ausgestaltete lösbare Verbindung zwischen Anschlußteil und Einsteckteil gebildet wird.

Vorteilhafterweise kann die Aufnahme des Anschlußteils kugelförmig oder teilkugelförmig ausgebildet sein, wobei der Steckfortsatz des Einsteckteils ebenfalls kugelförmig oder teilkugelförmig ausgebildet sein und von der Aufnahme des Anschlußteils passend aufgenommen werden kann. Man erhält somit also eine Rastverbindung zweier teilkugelförmig oder kugelförmig ausgeformter Teile, die aufeinander abgestimmt sind. Diese Rastverbindung wirkt neben der Rastfunktion im Prinzip ähnlich wie ein Kugelgelenk, das heißt, wenn Kräfte in schräger Richtung eingeleitet werden, dann kann sich der Steckfortsatz innerhalb der Aufnahme des Anschlußteils ähnlich wie bei einem Kugelgelenk in jeder Richtung bewegen. Das Auslösen der Rastverbindung tritt aber erst dann auf, wenn die Aufnahme des Anschlußteils durch die an den Streben, die mit dem Anschlußteil verbunden sind, auftretende Zugkraft soweit gespreizt wird, daß der teilkugelförmige Steckfortsatz aus dieser Aufnahme herausziehbar ist.

Vorzugsweise ist bei der erfindungsgemäßen Einrichtung die teilkugelförmige Aufnahme des Anschlußteils im Querschnitt des Anschlußteils gesehen so ausgebildet, daß sie etwa einen Umfangsbereich von zwischen 180° und 300° umschließt, vorzugsweise einen Umfangsbereich zwischen etwa 180° und etwa 270°. Es hat sich gezeigt, daß eine ausreichend feste Rastverbindung gegeben ist, wenn der Steckfortsatz entsprechend einem Umfangsbereich innerhalb der genannten Werte umfaßt wird. Bei der Ausbildung der Rastverbindung der einander zugeordneten teilkugelförmigen oder kugelförmigen Teile Steckfortsatz und Aufnahme kommt es im Hinblick auf die gewünschte Auslösekraft im übrigen auf die Elastizität des verwendeten Materials an, das in der Regel Kunststoff ist. Vorzugsweise werden Steckfortsatz und Aufnahme so elastisch ausgebildet, daß ein Lösen der Rastverbindung erst bei Auftreten einer Zugkraft von einigen Kilogrammen, vorzugsweise einer Zugkraft im Bereich von etwa 5 kg bis 15 kg auftritt. Die letztgenannten Werte haben sich in der Praxis zur vermeidung von Unfällen im gewöhnlichen Gebrauch des Fahrrads als besonders geeignet erwiesen.

Zur Verbindung der erfindungsgemäßen Einrichtung zur Befestigung der Streben mit dem Fahrrad weist das Einsteckteil vorzugsweise an der dem teilkugelförmigen Steckfortsatz gegenüberliegenden Seite ein Ringteil auf, vorzugsweise mit einer konzentrischen Mittelbohrung zur Aufnahme eine Befestigungselements, so daß man so das in das Anschlußteil eingesteckte Einsteckteil an einer Strebe des Fahrradrahmens befestigen kann, beispielsweise in Höhe der Radnabe.

Weiterhin ist vorzugsweise vorgesehen, daß das Einsteckteil einen teilkugelförmigen Steckfortsatz am einen Ende aufweist, mittels dessen die Rastverbindung zu dem Anschlußteil herstellbar ist, ein zylindrisches Ringteil an der gegenüberliegenden Seite zur Befestigung am Fahrradrahmen und ein kurzes diese beiden Teile verbindendes Mittelteil.

Vorteilhafterweise umfaßt das Anschlußteil mindestens eine weitere Aufnahme für das mindestens eine Teilstück der mindestens einen Strebe zur Halterung des Radschützers. Diese Aufnahme ist vorzugsweise auf der von der Aufnahme für das Einsteckteil abgewandten Seite des Anschlußteils angeordnet und kann beispielsweise als rohrförmige Aufnahme für Teilstücke der beispielsweise als Draht ausgeführten Strebe ausgebildet sein.

Die in den Unteransprüchen genannten Merkmale betreffen bevorzugte Weiterbildungen der Erfindung. Weitere Vorteile der Erfindung ergeben sich aus der nachfolgenden Detailbeschreibung.

Nachfolgend wird die vorliegende Erfindung anhand eines Ausführungsbeispiels unter Bezugnahme auf die beiliegende Zeichnung näher beschrieben. Dabei zeigt
- Fig. 1: eine erfindungsgemäße Einrichtung zur Befestigung von Streben zur Halterung eines Radschützers in schematisch vereinfachter Darstellung im teilweisen Längsschnitt;

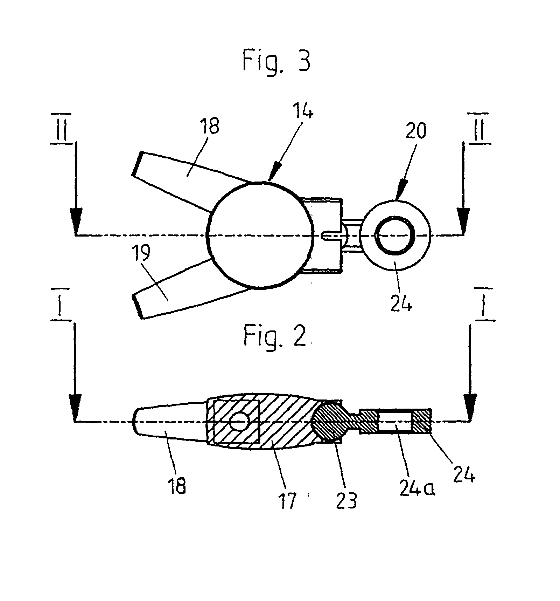

- Fig. 2: einen vertikalschnitt durch die erfindungsgemäße Einrichtung von Fig. 1;
- Fig. 3: eine entsprechende Ansicht dieser Einrichtung.

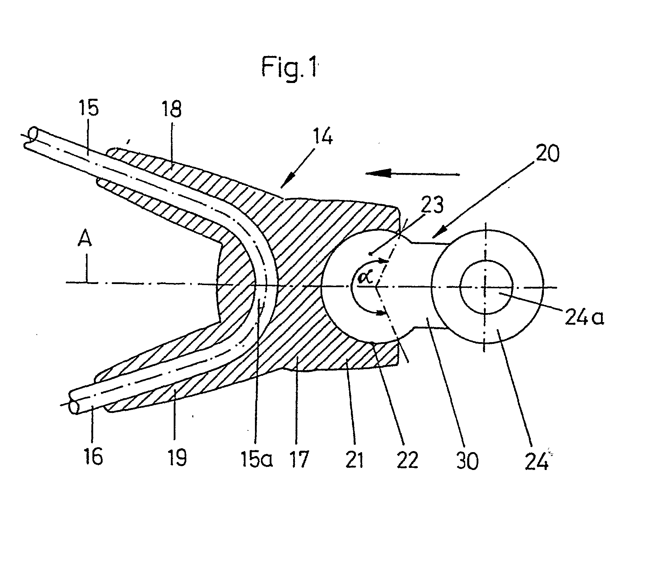

Die erfindungsgemäße Einrichtung zur Befestigung von Streben zur Halterung eines Radschützers gemäß Fig. 1 umfaßt ein als Anschlußteil 14 ausgeführtes erstes Teil mit einem Mittelstück 17, von dem aus sich radial nach außen hin zwei Aufnahmen 18, 19 erstrecken, die zumindest abschnittsweise etwa rohrförmig sind, um jeweils Teilstücke 15, 16 des Strebendrahtes aufzunehmen, wobei letztere ebenso wie die Aufnahmen einen spitzen Winkel einschließen. Man erkennt weiterhin, daß die beiden Enden der Teilstücke 15, 16 der Strebe in dem Anschlußteil 14 zu einer dort gebogenen durchgehenden einzigen Sicherheitsstrebe verbunden sind, wobei der gebogene Abschnitt der Strebe mit 15a bezeichnet ist. Diese Strebe wird in dem Anschlußteil 14 in den Aufnahmen 18, 19 und auch in dem Mittelstück 17 allseitig umschlossen und eingefasst.

Zu der zu den Teilstücken 15, 16 gegenüberliegenden Seite hin erstreckt sich von dem Mittelstück 17 aus eine Anformung 21 des Anschlußteils 14, wobei diese Anformung 21 in dem vorliegenden Ausführungsbeispiel jeweils einen stumpfen Winkel mit den beiden Aufnahmen 18, 19 einnimmt. Diese Anformung 21 hat in dem abgebildeten Ausführungsbeispiel eine innen kugelförmige beziehungsweise teilkugelförmige Aufnahme 22, in die ein als Steckfortsatz 23 ausgebildeteter Abschnitt eines als Einsteckteils 20 ausgebildeten zweiten Teils einschiebbar ist. Die Einsteckrichtung des Steckfortsatzes 23 in die teilkugelförmige Aufnahme 22 des Anschlußteils 14 ist in Fig. 1 durch den Pfeil gekennzeichnet.

Man erkennt weiterhin, daß das Einsteckteil 20 am anderen Ende ein am Steckfortsatz 23 angeformtes Ringteil 24 aufweist. Dieses Ringteil 24 kann man über eine Schraubverbindung an der Anformung einer Vorderradgabel eines Fahrrads anschrauben, was an sich aus dem Stand der Technik bekannt ist und deshalb in der Zeichnung Fig. 1 nicht dargestellt ist. Dazu hat das Ringteil 24 eine konzentrische Mittelbohrung 24a, die eine Schraube oder auch ein anderes geeignetes Befestigungselement aufnehmen kann. Der Steckfortsatz 23 wird zur Verbindung des Einsteckteils 20 mit dem Anschlußteil 14 in die Aufnahme 22 eingesteckt, die entsprechend diesem teilkugelförmig ausgebildet ist. Dabei ergibt sich eine Rastverbindung, die bis zu einer bestimmten vorgegebenen Belastungsgrenze fest und auf Zug in Richtung entgegen des in Fig. 1 eingezeichneten Pfeils belastbar ist. Jedoch dann, wenn die Zugkraft, die über die Streben 15, 16 entgegen der Pfeilrichtung von Fig. 1 einwirkt, Einsteckteil 20 und Anschlußteil 14 auseinanderzieht und eine vorgegebene Grenzbelastung überschritten wird, löst sich die Rastverbindung. Dies ist der Effekt der gewünschten Sicherheitsbefestigung der Sicherheitsstreben 15, 16, die vom Radschützer (nicht dargestellt) des Fahrrads kommen, an der Vorderradgabel (nicht dargestellt) des Fahrrads und somit letztendlich am Rahmen des Fahrrads.

Wie man aus der Zeichnung erkennen kann, ist die teilkugelförmige Aufnahme 22 des Anschlußteils 14 im Querschnitt des Anschlußteils gesehen so ausgebildet, daß sie einen Umfangsbereich von vorzugsweise mehr als 180° umschließt, beispielsweise wie in der Zeichnung einen Umfangsbereich von etwa 230° entsprechend dem eingezeichneten Winkel α. Dabei kommt es natürlich auf die Elastizität des Materials an. Davon ist abhängig, bei welcher Zugkraft die beiden Schenkel des Anschlußteils, die innenseitig die Aufnahme 22 bilden, so auseinanderspreizen, daß der teilkugelförmige Bereich des Steckfortsatzes 23 des Einsteckteils 20 aus der Aufnahme 22 herausgezogen werden kann. Neben der Elastizität des verwendeten Materials spielt dann auch der Umfangsbereich gemäß dem Winkel α eine Rolle mit dem die teilkugelförmige Aufnahme 22 den Steckfortsatz 23 übergreift, wobei einleuchtet, daß dieser Umfangsbereich oberhalb von 180° liegen sollte.

Die Besonderheit bei der erfindungsgemäßen Einrichtung gegenüber dem Stand der Technik liegt darin, daß nicht nur ein Lösen zwischen dem Einsteckteil 20 und dem Anschlußteil 14 bei Auftreten einer einen bestimmten Grenzwert überschreitenden Zugverbindung möglich ist, sondern daß auch zwischen dem Einsteckteil 20 und dem Anschlußteil 14 eine kugelgelenkartige Verbindung besteht, so daß auch ein Lösen der Rastverbindung problemlos erfolgt, wenn die auftretenden Zugkräfte nicht in Richtung der Verbindungsachse A zwischen Anschlußteil 14 und Einsteckteil 20 wirken. Des weiteren wird erreicht, daß man bei dieser Art der Verrastung nicht zwischen rechts und links unterscheiden muß, wodurch sich logistische Vorteile beim Hersteller und beim Fahrradhersteller ergeben.

## Patentansprüche

1. Einrichtung zur Befestigung von Streben zur Halterung eines Radschützers am Rahmen eines Fahrrads umfassend mindestens ein erstes Teil (14), an dem mindestens ein Teilstück (15, 16) mindestens einer Strebe zur Halterung des Radschützers befestigt werden kann oder befestigt ist, sowie weiterhin umfassend mindestens ein zweites Teil (20), das an dem Fahrradrahmen befestigbar ist, wobei das erste und das zweite Teil (14, 20) über eine lösbare Verbindung miteinander verbunden sind, die derart ausgebildet ist, dass sie sich dann selbsttätig löst, wenn eine die Teile (14, 20) auseinanderziehende Kraft einen vorgegebenen Grenzwert überschreitet, **dadurch gekennzeichnet, dass** die Verbindung zwischen erstem und zweitem Teil (14, 20) derart ausgebildet ist, dass miteinander verbundenes erstes und zweites Teil (14, 20) um mindestens eine Achse gegeneinander zumindest teilweise verschwenkbar sind, wobei diese Achse zu der Verbindungslinie (A) zwischen erstem und zweitem Teil (14, 20) geneigt ist, vorzugsweise senkrecht zu dieser ist.

2. Einrichtung zur Befestigung von Streben zur Halterung eines Radschützers nach Anspruch 1, **dadurch gekennzeichnet, dass** das erste Teil ein Anschlußteil (14) ist, das eine Aufnahme (22) umfaßt, und dass das zweite Teil ein Einsteckteil (20) ist, das mit einem Abschnitt (23) in die Aufnahme (22) einsteckbar ist, wobei durch Einstecken dieses Abschnittes (23) in die Aufnahme (22) die lösbare Verbindung zwischen Anschlußteil (14) und Einsteckteil (20) gebildet wird.

3. Einrichtung zur Befestigung von Streben zur Halterung eines Radschützers nach einem der Ansprüche 1 oder 2, **dadurch gekennzeichnet, dass** die lösbare Verbindung zwischen erstem und zweitem Teil (14, 20) als Rastverbindung ausgebildet ist.

4. Einrichtung zur Befestigung von Streben zur Halterung eines Radschützers nach einem der Ansprüche 2 oder 3, **dadurch gekennzeichnet, dass** die Aufnahme (22) des Anschlußteils (14) kugelförmig oder teilkugelförmig ausgebildet ist und der in dieser Aufnahme einschiebbare vorzugsweise als Steckfortsatz (23) ausgebildete Abschnitt des Einsteckteils (20) ebenfalls kugelförmig oder teilkugelförmig ausgebildet ist und von der Aufnahme (22) des Anschlußteils (14) passend aufgenommen wird.

5. Einrichtung zur Befestigung von Streben zur Halterung eines Radschützers nach Anspruch 4, **dadurch gekennzeichnet, dass** die teilkugelförmige Aufnahme (22) des Anschlußteils (14) im Querschnitt des Anschlußteils gesehen etwa einen Umfangsbereich von zwischen 180° und 300°, vorzugsweise zwischen 180° und 270° umschließt.

6. Einrichtung zur Befestigung von Streben zur Halterung eines Radschützers nach Anspruch 4 oder 5, **dadurch gekennzeichnet, dass** der teilkugelförmige Bereich der Aufnahme (22) des Anschlußteils (14), der den Steckfortsatz (23) des Einsteckteils (20) übergreift so elastisch ausgebildet ist, daß ein Lösen der Rastverbindung erst bei Auftreten einer Zugkraft von einigen Kilogramm, vorzugsweise einer Zugkraft im Bereich von etwa 5 kg bis 15 kg auftritt.

7. Einrichtung zur Befestigung von Streben zur Halterung eines Radschützers nach einem der Ansprüche 4 bis 6 **dadurch gekennzeichnet, dass** das Einsteckteil (20) an der dem teilkugelförmigen Steckfortsatz (23) gegenüberliegenden Seite ein Ringteil (24) mit einer konzentrischen Mittelbohrung (24a) aufweist zur Aufnahme eines Befestigungselements zur Befestigung des in das Anschlußteil (14) eingesteckten Einsteckteils (20) an einer Strebe des Fahrradrahmens.

8. Einrichtung zur Befestigung von Streben zur Halterung eines Radschützers nach einem der Ansprüche 4 bis 7, **dadurch gekennzeichnet, dass** das Einsteckteil (20) einen teilkugelförmigen Steckfortsatz (23) am einen Ende, ein zylindrisches Ringteil (24) an der gegenüberliegenden Seite und ein kurzes diese beiden verbindendes Mittelteil (30) aufweist.

9. Einrichtung zur Befestigung von Streben zur Halterung eines Radschützers nach einem der Ansprüche 1 bis 8, **dadurch gekennzeichnet, dass** das erste Teil (14), mindestens eine weitere Aufnahme (18, 19) umfaßt, von dem das mindestens eine Teilstück (15, 16) der mindestens einen Strebe zur Halterung des Radschützers aufgenommen werden kann.

## Claims

1. Device for fastening struts for securing a mudguard to the frame of a bicycle, comprising at least one first part (14) to which at least one subsection (15, 16) of at least one strut for securing the mudguard can be fastened or is fastened, and furthermore comprising at least one second part (20) which can be fastened to the bicycle frame, the first part and the second part being connected to each other via a releasable connection which is designed in such a manner that it is automatically released if a force pulling apart the parts (14, 20) exceeds a predefined limit value, **characterized in that** the connection between the first and second parts (14, 20) is designed in such a manner that the first and second parts (14, 20), which are connected to each other, can be at least partially pivoted in relation to each other about at least one axis, this axis being inclined with respect to the connecting line (A) between the first and second parts (14, 20), and preferably being perpendicular to the said connecting line.

2. Device for fastening struts for securing a mudguard according to Claim 1, **characterized in that** the first part is an attachment part (14) which comprises a holder (22), and **in that** the second part is a plug-in part (20) which can be plugged with a section (23) into the holder (22), the releasable connection between the attachment part (14) and plug-in part (20) being formed by plugging this section (23) into the holder (22).

3. Device for fastening struts for securing a mudguard according to either of Claims 1 and 2, **characterized in that** the releasable connection between the first and second parts (14, 20) is designed as a latching connection.

4. Device for fastening struts for securing a mudguard according to either of Claims 2 and 3, **characterized in that** the holder (22) of the connecting part (14) is of spherical or partially spherical design, and that section of the plug-in part (20) which can be pushed into this holder and is preferably designed as a plug-in extension (23) is likewise of spherical or partially spherical design and is held by the holder (22) of the attachment part (14) in a well-fitting manner.

5. Device for fastening struts for securing a mudguard according to Claim 4, **characterized in that** the partially spherical holder (22) of the attachment part (14) encloses, as seen in the cross section of the attachment part, a circumferential region approximately at between 180° and 300°, preferably between 180° and 270°.

6. Device for fastening struts for securing a mudguard according to Claim 4 or 5, **characterized in that** the partially spherical region of the holder (22) of the attachment part (14) that fits around the plug-in extension (23) of the plug-in part (20) is of elastic design such that a release of the latching connection occurs only if a tensile force of some kilograms, preferably a tensile force in the region of approximately 5 kg to 15 kg, occurs.

7. Device for fastening struts for securing a mudguard according to one of Claims 4 to 6, **characterized in that** the plug-in part (20) has, on the side lying opposite the partially spherical plug-in extension (23), an annular part (24) having a concentric central hole (24a) for receiving a fastening element for fastening the plug-in part (20), which is plugged into the attachment part (14), to a strut of the bicycle frame.

8. Device for fastening struts for securing a mudguard according to one of Claims 4 to 7, **characterized in that** the plug-in part (20) has a partially spherical plug-in extension (23) at the one end, a cylindrical annular part (24) on the opposite side and a short central part (30) connecting these two parts.

9. Device for fastening struts for securing a mudguard according to one of Claims 1 to 8, **characterized in that** the first part (14) comprises at least one further holder (18, 19) by which the at least one subsection (15, 16) of the at least one strut for securing the mudguard can be held.

## Revendications

1. Dispositif pour la fixation de montants de fixation d'un garde-boue sur le cadre d'une bicyclette, comprenant au moins une première partie (14), sur laquelle on peut fixer ou est fixée au moins une partie partielle (15, 16) d'au moins un montant pour la fixation du garde-boue, et comprenant en outre aussi au moins une deuxième partie (20), qui peut être fixée sur le cadre de la bicyclette, la première et la deuxième partie (14, 20) étant connectées l'une à l'autre par le biais d'une connexion desserrable qui est réalisée de telle sorte qu'elle se détache automatiquement lorsqu'une force écartant les parties (14, 20) dépasse une valeur limite prédéfinie, **caractérisé en ce que** la connexion entre la première et la deuxième partie (14, 20) est réalisée de telle sorte que la première et la deuxième partie (14, 20) connectées l'une à l'autre peuvent pivoter au moins partiellement l'une par rapport à l'autre autour d'au moins un axe, cet axe étant incliné vers la ligne de connexion (A) entre la première et la deuxième partie (14, 20), de préférence étant perpendiculaire à celle-ci.

2. Dispositif pour la fixation de montants de fixation d'un garde-boue selon la revendication 1, **caractérisé en ce que** la première partie est une partie de raccordement (14) qui comprend un logement (22) et **en ce que** la deuxième partie est une partie d'enfichage (20) qui peut être insérée dans le logement (22) avec une portion (23), l'insertion de cette portion (23) dans le logement (22) formant la connexion desserrable entre la partie de raccordement (14) et la partie d'enfichage (20).

3. Dispositif pour la fixation de montants de fixation d'un garde-boue selon l'une quelconque des revendications 1 ou 2, **caractérisé en ce que** la connexion desserrable entre la première et la deuxième partie (14, 20) est réalisée sous forme de connexion par encliquetage.

4. Dispositif pour la fixation de montants de fixation d'un garde-boue selon l'une quelconque des revendications 2 ou 3, **caractérisé en ce que** le logement (22) de la partie de raccordement (14) est réalisé sous forme de sphère ou de sphère partielle et la portion de la partie d'enfichage (20) pouvant être enfoncée dans ce logement et réalisée de préférence en tant que saillie d'enfichage (23) est également réalisée sous forme de sphère ou de sphère partielle et est reçue de manière adaptée par le logement (22) de la partie de raccordement (14).

5. Dispositif pour la fixation de montants de fixation d'un garde-boue selon la revendication 4, **caractérisé en ce que** le logement (22) en forme de sphère partielle de la partie de raccordement (14), vu en section transversale de la partie de raccordement, comprend environ une région périphérique comprise entre 180° et 300°, de préférence entre 180° et 270°.

6. Dispositif pour la fixation de montants de fixation d'un garde-boue selon la revendication 4 ou 5, **caractérisé en ce que** la région en forme de sphère partielle du logement (22) de la partie de raccordement (14), qui vient en prise par le dessus avec la saillie d'enfichage (24) de la partie d'enfichage (20), est réalisée élastiquement de telle sorte qu'un desserrage de la connexion par encliquetage se produise seulement en présence d'une force de traction de quelques kilogrammes, de préférence d'une force de traction dans la plage d'environ 5 kg à 15 kg.

7. Dispositif pour la fixation de montants de fixation d'un garde-boue selon l'une quelconque des revendications 4 à 6, **caractérisé en ce que** la partie d'enfichage (20) du côté opposé à la saillie d'enfichage en forme de sphère partielle (23) présente une partie annulaire (24) avec un alésage central concentrique (24a) pour recevoir un élément de fixation pour la fixation de la partie d'enfichage (20) enfichée dans la partie de raccordement (14) sur un montant du cadre de la bicyclette.

8. Dispositif pour la fixation de montants de fixation d'un garde-boue selon l'une quelconque des revendications 4 à 7, **caractérisé en ce que** la partie d'enfichage (20) présente une saillie d'enfichage en forme de sphère partielle (23) à une extrémité, une partie annulaire cylindrique (24), du côté opposé et une partie centrale courte (30) reliant les deux.

9. Dispositif pour la fixation de montants de fixation d'un garde-boue selon l'une quelconque des revendications 1 à 8, **caractérisé en ce que** la première partie (14) comprend au moins un autre logement (18, 19) par lequel l'au moins une partie partielle (15, 16) d'au moins un montant pour la fixation d'un garde-boue peut être reçue.
